# EUROPÄISCHE PATENTSCHRIFT

(11) **EP 2 269 882 B1**
(45) Veröffentlichungstag und Bekanntmachung des Hinweises auf die Patenterteilung: **19.12.2012**
(21) Anmeldenummer: 10167982.7
(22) Anmeldetag: 30.06.2010
(51) Int. Cl.: B60K 6/36, B60K 6/547, B60W 10/113, B60W 30/182, B60W 10/06, B60W 10/02, B60W 30/18

(54) **Verfahren zum Betreiben eines Fahrzeugs in einem Segelnmodus**
Method for operating a vehicle in coasting mode
Procédé destiné au fonctionnement d'un véhicule dans un mode roue libre

(30) Priorität: 30.06.2009 DE 102009031297
(43) Veröffentlichungstag der Anmeldung: 05.01.2011
(73) Patentinhaber: Getrag Ford Transmissions GmbH, 50735 Köln (DE)
(72) Erfinder: Leibbrandt, Martin, 50181, Bedburg (DE); Schmitz, Harald, 44225, Dortmund (DE)

(56) Entgegenhaltungen:
- WO-A1-02/099301
- WO-A1-2008/098801
- DE-A1- 19 939 334
- DE-A1-102004 041 265
- US-A1- 2003 233 186

## Beschreibung

Die Erfindung betrifft ein Verfahren zum Betreiben eines Fahrzeugs, wobei das Fahrzeug einen Antriebsstrang aufweist, der ein Antriebsmoment bereitstellt und der einen Motor, wenigstens eine erste automatisierte Kupplung und ein Schaltgetriebe mit wenigstens einer ersten Eingangswelle aufweist, wobei das Antriebsmoment vom Motor über die erste Kupplung auf die erste Eingangswelle übertragbar ist.

Es existieren viele verschiedene Verfahren, um den Energieverbrauch beim Betrieb des Fahrzeugs zu verringern. Eine Strategie besteht darin, einen möglichst hohen Gang im Schaltgetriebe einzulegen, um eine Motordrehzahl des Motors und die damit verbundenen Reibungsverluste möglichst niedrig zu halten. Diese Strategie wird jedoch in der Regel durch das Geräuschverhalten des Motors begrenzt, da der Motor unterhalb einer bestimmten Drehzahl ein Resonanzband hat, welches zu starker Geräuschentwicklung führt, so dass ein Betrieb innerhalb dieses Bandes nicht zu empfehlen ist. Dieses Band wird auch als Boom-Bereich des Motors beschrieben.

Als eine weitere Strategie zum Energiesparen ist bekannt, während Verzögerungen des Fahrzeugs die Kraftstoffzufuhr zum Motor zu unterbrechen, um in nicht angetriebenen Phasen keinen Treibstoff zu verbrauchen. Es handelt sich dabei um die sogenannte Schubabschaltung.

Das gattungen bildende Dokument WO 02/099301 A1 offenbart ein Steuerungsverfahren für das Bergabrollen eines Fahrzeugs, wobei ein Schleppmoment des Motors größer ist als ein durch das Gefälle bedingtes Drehmoment. Daher wird das Fahrzeug beim Bergabrollen abgebremst. Um ein Abwürgen des Motors zu verhindern, wird bei Erreichen einer Auskuppeldrehzahl die Kupplung zwischen Motor und Getriebe geöffnet. Da der Motor das Fahrzeug nicht mehr abbremst, wird es beim Bergabrollen wieder beschleunigt. Bei Erreichen einer Einkuppelzahl wird die Kupplung wieder teilweise geschlossen und bei Schlupf betrieben, sodass ein störender Wechsel von Abbremsen und Beschleunigen des Fahrzeugs beim Bergabrollen vermieden werden soll. Die US 2003/0233186 A1 offenbart ein Verfahren zur Regelung der Geschwindigkeit eines Fahrzeugs, bei dem Reibkupplungen innerhalb des Schaltgetriebes Reibmomente erzeugen, die das Fahrzeug abbremsen.

Um den Treibstoffverbrauch bei nahezu konstant fahrenden Fahrzeugen zu verringern, kann, wie z. B. in der DE 10 2006 023 526 oder in der DE 102 21 701 dargelegt, der Motor vom Getriebe entkoppelt werden. Dieser als "Segeln" bezeichnete Zustand führt dazu, dass die kinetische Energie des Fahrzeugs möglichst gut ausgenutzt wird, während der Motor entweder abgeschaltet wird (in Hybridfahrzeugen oder in Fahrzeugen mit Stopp/Start-Automatik), oder aber mit Leerlaufdrehzahl betrieben wird, wobei letztere mit sehr geringem Kraftstoffverbrauch verbunden ist.

Das Problem dabei ist, dass die durch Luft- und Rollwiderstand induzierte Reibung das Fahrzeug soweit verzögert, dass eine konstante bzw. näherungsweise konstante Geschwindigkeit zumindest in der Ebene nicht aufrecht erhalten werden kann. Dadurch ist der Fahrer gezwungen, das Fahrzeug periodisch z.B. durch Betätigung eines Fahrpedals wieder auf eine Geschwindigkeit leicht über der gewünschten Geschwindigkeit zu beschleunigen. Dies führt dazu, dass nachfolgende Fahrzeuge Schwierigkeiten haben, sich auf diese Fahrweise einzustellen. Ebenfalls wird Treibstoff-Einsparpotential speziell in den verschiedenen Fahrzyklen verschenkt, da die vorgegebene Toleranz es entweder gar nicht oder nur sehr knapp erlaubt, die Konstantfahranteile durch "Segeln" zu überbrücken.

Der Erfindung liegt daher die Aufgabe zugrunde, ein Verfahren zum Betreiben eines Fahrzeugs bereit zu stellen, das den Fahrkomfort steigert und wenig Energie verbraucht.

Die der Erfindung zugrunde liegende Aufgabe wird mit dem Verfahren gemäß Anspruch 1 gelöst. Bevorzugte Ausführungsbeispiele können den Unteransprüchen entnommen werden.

Das Verfahren gemäß Anspruch 1 sieht vor, dass zwischen einem Normalmodus und einem Gleitmodus unterschieden wird, wobei im Normalmodus das Antriebsmoment durch das Motormoment des Motor eingestellt wird und wobei in dem Gleitmodus das Antriebsmoment über ein maximal übertragbares Drehmoment der ersten Kupplung eingestellt wird, die Kupplung mit Schlupf betrieben wird und die Motordrehzahl in etwa einer Leerlaufdrehzahl des Motors entspricht. In einem bevorzugten Ausführungsbeispiel wird im Gleitmodus der Motor über einen Leerlaufregler geregelt.

Damit ein Drehmoment vom Motor über die mit Schlupf betriebene erste Kupplung übertragen werden kann, muss die Drehzahl der ersten Eingangswelle kleiner sein als die Motordrehzahl. Die Drehzahl der Eingangswelle lässt sich bei einer gegebenen Geschwindigkeit des Fahrzeugs über die Wahl des eingelegten Ganges einstellen. Je nach verfügbarem Gang lässt sich somit für die erste Eingangswelle eine Drehzahl einstellen, die entweder dicht unterhalb, dicht oberhalb der Leerlaufdrehzahl des Motors liegt oder gar ihr genau entspricht. Für den Fall, dass die Drehzahl der ersten Eingangswelle unterhalb der Leerlaufdrehzahl liegt, kann die erste Kupplung soweit geschlossen werden, dass ein vom Leerlaufregler stellbares Antriebsmoment in das Schaltgetriebe eingeleitet wird. Dadurch wird mit minimalem Energieaufwand die Segelphase verlängert. Vorzugsweise wird dabei ein Gang gewählt, der möglichst nahe an der Leerlaufdrehzahl des Motors liegt, um die Reibungsverluste in der ersten Kupplung zu minimieren.

Im Folgenden werden die Begriffe "Segeln" und "Gleiten" synonym verwendet. Somit beschreibt die Segelphase das Fahren des Fahrzeugs im Gleitmodus. Ein Segeln im engeren Sinne, bei dem, wie oben bereits bei der Diskussion zum Stand der Technik beschrieben, der Motor vollständig vom Getriebe getrennt wird, liegt somit nicht vor, da erfindungsgemäß der Antriebsstrang ein Antriebsmoment im Gleitmodus weiterhin für den Antrieb des Fahrzeugs bereitstellt.

Falls die Drehzahl der ersten Eingangswelle oberhalb der Leerlaufdrehzahl liegt, kann die Motordrehzahl auch leicht angehoben werden, um ein Drehzahlgefälle zwischen dem Motor und der ersten Eingangswelle zu erzeugen. Somit muss die Motordrehzahl im Gleitmodus nicht exakt der Leerlaufdrehzahl entsprechen. Zweckmäßiger Weise sollte die Motordrehzahl jedoch im Gleitmodus unterhalb von 1.000 Umdrehungen pro Minute liegen. Bei einer Leerlaufdrehzahl von beispielsweise 600 Umdrehungen pro Minute kann die Motordrehzahl 600 oder Werte zwischen 600 und 800 Umdrehungen pro Minute annehmen. In einem bevorzugten Ausführungsbeispiel ist es ein wichtiges Kriterium, dass die Motordrehzahl im Gleitmodus unterhalb des Boom-Bereiches liegt. Je nach Motor kann der Boom-Bereich sich von 600 bis 1.200 Umdrehungen pro Minute erstrecken. Es sei darauf hingewiesen, dass die Idee, einen Gang zu wählen, der zu einer Motordrehzahl unterhalb des Boom-Bereiches führt, ebenfalls zu einer Energieeinsparung führt, auch wenn die erste Kupplung nicht im Schlupf betrieben wird.

Im Gegensatz zum Normalmodus beim Betreiben des Fahrzeugs, bei dem die erste Kupplung ohne Schlupf oder lediglich mit Mikroschlupf betrieben wird, beträgt in einem bevorzugten Ausführungsbeispiel der Schlupf der ersten Kupplung im Gleitmodus mehr als 20 Umdrehungen pro Minute. Der Schlupf kann dabei auch Werte von über 40 oder gar 60 Umdrehungen pro Minute annehmen. Unter Schlupf ist die Drehzahldifferenz zwischen der Drehzahl der ersten Eingangswelle und der Motordrehzahl des Motors zu verstehen.

Bei dem Schaltgetriebe handelt es sich vorzugsweise um ein automatisiertes Schaltgetriebe. Insbesondere kann das Schaltgetriebe als Doppelkupplungsgetriebe ausgebildet sein, das ein erstes Teilgetriebe und ein zweites Teilgetriebe aufweist, wobei die erste Eingangswelle dem ersten Teilgetriebe zugeordnet ist und sich über die erste Kupplung mit dem Motor verbinden lässt. Das Doppelkupplungsgetriebe weist des Weiteren eine zweite, dem zweiten Teilgetriebe zugeordnete Eingangswelle auf, die sich über eine zweite Kupplung mit dem Motor verbinden lässt.

Vorzugsweise ist in dem zweiten Teilgetriebe ein Fahrgang eingelegt, der zu einer Drehzahl der zweiten Eingangswelle führt, die deutlich über der Leerlaufdrehzahl des Motors liegt. Im ersten Teilgetriebe kann ein Gleitgang eingelegt sein, der zu einer Drehzahl der ersten Eingangswelle führt, die unter der Leerlaufdrehzahl des Motors bzw. unter einer Motordrehzahl liegt, die gegenüber der Leerlaufdrehzahl leicht angehoben ist, wobei im Gleitmodus die zweite Kupplung im Wesentlichen geöffnet ist. Dies bedeutet, dass über das zweite Teilgetriebe kein Antriebsmoment übertragen wird, sondern der Drehmomentfluss durch den Antriebsstrang vom Motor über die mit Schlupf betriebene erste Kupplung zum ersten Teilgetriebe verläuft. Durch den eingelegten Fahrgang lassen sich Verzögerungen beim Beginn und beim Verlassen des Segelzustands (Gleitmodus) minimieren, indem einfach das Drehmoment auf das zweite Teilgetriebe übergeben wird, indem die zweite Kupplung geschlossen wird. Bevorzugte Drehzahlen für die zweite Eingangswelle mit eingelegtem Fahrgang betragen mehr als 1.200 oder 1.300 Umdrehungen pro Minute, so dass die Drehzahl der zweiten Eingangswelle oberhalb des Boom-Bereiches liegt. Je nach Verlauf der Geschwindigkeit des Fahrzeugs kann der Fahrgang auch gewechselt werden. Der neue Fahrgang führt dann beispielsweise bei kleineren Fahrzeuggeschwindigkeiten zu einem geringeren Abfall der Drehzahl der zweiten Eingangswelle bzw. zu einem Anstieg der Drehzahl der zweiten Eingangswelle. Auch kann das Schaltschema so verändert werden, dass der Fahrgang im Vergleich zu einem Fahrgang nach normalem Schaltschema zu höheren Drehzahlen der zweiten Eingangswelle führt, um eine Zug-Runterschaltung direkt nach dem Verlassen des Segelzustands zu vermeiden.

Das maximal übertragbare Kupplungsmoment kann in Abhängigkeit verschiedener Faktoren eingestellt werden. So kann das Kupplungsmoment von der Fahrzeuggeschwindigkeit und/oder den Fahrzeugwiderständen abhängen. Beispielsweise kann die Abhängigkeit von der Geschwindigkeit so gewählt werden, dass Roll- und Luftwiderstände des Fahrzeugs gerade kompensiert werden, wodurch die Fahrzeuggeschwindigkeit in der Ebene konstant gehalten wird. Das übertragbare Kupplungsmoment kann jedoch auch so eingestellt werden, dass das Fahrzeug leicht ausrollt und der Fahrer das Gefühl hat, dass das Fahrzeug sehr leichtgängig ist.

Alternativ oder zusätzlich kann im Gleitmodus das maximal übertragbare Kupplungsmoment der ersten Kupplung von einer Fahrpedalstellung abhängen. Somit wird dem Fahrer eine Stellmöglichkeit angeboten. Dabei sollten zweckmäßigerweise niedrige Fahrpedalstellungen (vorzugsweise unter 10 %) benutzt werden, in denen das Kupplungsmoment zwischen 0 N_{M} und einem Maximalwert (beispielsweise 10 N_{M}) variiert wird, welcher, wiederum bevorzugt, von der Geschwindigkeit des Fahrzeugs abhängen kann.

Die Möglichkeit, über das Fahrpedal im Gleitmodus das übertragbare Kupplungsmoment zu beeinflussen, ist vorzugsweise nur dann gegeben, wenn die Fahrpedalstellung unterhalb eines Grenzwertes liegt. Lassen sich mit dem Fahrpedal Stellungen von 0 % (Fahrpedal nicht getreten) bis 100 % (Fahrpedal bis zum Anschlag durchgedrückt) realisieren, kann der Grenzwert Werte zwischen 5 und 15 %, vorzugsweise 10 % annehmen. Der Grenzwert kann dabei von verschiedenen Faktoren abhängen. Beispielsweise kann der Grenzwert von der Fahrzeuggeschwindigkeit oder vom eingelegten Gang bzw. den eingelegten Gängen abhängen. So lässt sich ein Totweg des Fahrpedals zum Beispiel beim Anfahren vermeiden. In diesem Fall wäre der Grenzwert 0 %. Mit anderen Worten: eine entsprechende Modifikation der Motorsteuerung bzw. der Abhängigkeit der Fahrpedalstellung zum Motormoment, soll zweckmäßigerweise nur in höheren Gängen und/oder nur während der Segelphase stattfinden. Hierzu kann ein Signal von einem Getriebesteuergerät an ein Motorsteuergerät gesendet werden, welches die Motorsteuerung entsprechend umschaltet.

Liegt beispielsweise der Grenzwert bei 10 %, so beginnt die Momentenanforderung an den Motor erst mit den Fahrpedalstellungen, die gleich oder größer als 10 % sind. Entsprechend muss die Steuerstrategie für den Motor darauf abgestimmt sein. Bei ganz niedrigen Pedalstellungen (zum Beispiel zwischen 0 und 5 %) kann die zweite Kupplung, mit der das den Fahrgang umfassende Teilgetriebe mit dem Motor verbunden werden kann, mit sinkendem Pedalwert immer weiter geschlossen werden, um ein Schleppmoment des Verbrennungsmotors übertragen zu können und somit eine Schubabschaltung des Motors zur weiteren Kraftstoffersparnis weiter nutzen zu können. Alternativ kann in dem Fall, in dem die Leerlaufdrehzahl angehoben wurde, auch der Gang im ersten Teilgetriebe zur Übertragung des Schleppmomentes benutzt werden, wenn die Leerlaufanhebung zuvor rückgängig gemacht worden ist. Das Schleppmoment des Verbrennungsmotors soll dabei das Moment sein, das aufgrund Trägheitskräfte vom Motor zur Verfügung gestellt wird, wenn dieser abgebremst wird. Die Schubabschaltung, die gleichzusetzen ist mit dem Verlassen des Segel-Betriebs bzw. mit dem Gleitmodus, kann alternativ auch durch andere Signale wie zum Beispiel das Betätigen der Bremse ausgelöst werden.

Der Segel-Betrieb kann in Richtung normales Fahren verlassen werden, wenn das Fahrpedal eine definierte Position (den Grenzwert) überschreitet. Daraufhin würde das Kupplungsmoment konstant gehalten oder sogar leicht abgesenkt, damit die Drehzahl des Motors bis auf die Drehzahl der zweiten Eingangswelle ansteigen kann. Dadurch würde dann durch eine Drehmomentübergabe von der ersten Kupplung (Segel-Kupplung) auf die zweite Kupplung (Fahr-Kupplung) der Fahrgang aktiviert bzw. wirksam gestellt werden.

Eine weitere Methode besteht darin, dass maximal übertragbare Kupplungsmoment der ersten Kupplung in Abhängigkeit des Schlupfes zwischen Motor und erster Eingangswelle zu stellen. Dadurch kann der Fahrer das übertragbare Drehmoment direkt mit dem Fahrpedal einstellen. Auch ist hierbei keine Abhängigkeit des Verfahrens von der Leerlaufdrehzahl gegeben. Dabei kann die Abhängigkeit des Kupplungsmomentes von dem Schlupf so gestaltet werden, dass der Schlupf minimal bleibt. So kann zum Beispiel die Steigung der Momenten-Schlupfkennlinie vergleichsweise hoch gewählt werden.

Steigt die Momentenanforderung über einen Wert, der durch den entsprechenden Schlupf dafür sorgen würde, dass die Motordrehzahl in den Boom-Bereich wechseln würde, so kann der Gleitmodus verlassen werden, indem das Kupplungsmoment entweder konstant gehalten oder sogar leicht abgesenkt wird. Dadurch wird aufgrund der größeren Pedalstellung die Motordrehzahl soweit steigen, dass sie in etwa der Drehzahl der zweiten Eingangswelle entspricht und die zweite Kupplung geschlossen werden kann. Die zweite Kupplung wird dann ganz normal mit geschlossener Kupplung oder im Mikroschlupf betrieben.

Somit kann ein Grenzwert G1 für die Fahrpedalstellung definiert werden, ab dem für dann größere Fahrpedalstellungen vom Gleitmodus GLEIT in den Normalmodus NORMAL gewechselt wird. Unter einem zweiten Grenzwert G2, der kleiner als G1 ist, kann dabei vom Gleitmodus GLEIT in den Normalmodus NORMAL gewechselt wird, wobei entweder die erste Kupplung oder die zweite Kupplung zumindest teilweise geschlossen wird. Das von der Kupplung maximal übertragbare Kupplungsmoment kann zudem dabei durch die Fahrpedalstellung bestimmt werden. Vorzugsweise wirkt Motormoment bei Motordrehzahlen oberhalb der Leerlaufdrehzahl unterhalb vom zweiten Grenzwert G2 bremsend und oberhalb vom ersten Grenzwert G1 antreibend.

Oder anders ausgedrückt: Fällt die Motordrehzahl durch Reduktion der Pedalstellung unter die Drehzahl der ersten Eingangswelle, so kann durch Schließen der ersten Kupplung (Segel-Kupplung) oder der zweiten Kupplung (Fahr-Kupplung) auch bei diesem Verfahren das Schleppmoment des Motors übertragen und somit die Schubabschaltung ausgenutzt werden.

Die folgenden Funktionen und Merkmale hinsichtlich einer sogenannten Start-Stop-Funktion, mit denen heutige Fahrzeugantriebe vermehrt ausgerüstet sind, lassen sich zusätzlich mit den oben beschriebenen Merkmalen zum Segeln kombinieren oder auch nur alternativ dazu realisieren. Die Start-Stop-Funktion bedeutet, dass beispielsweise bei einem Halt an einer Ampel der Verbrennungsmotor abgeschaltet wird, sobald ein Fahrzustand von einer Überwachungseinheit als (andauernder) Halt erkannt wird. Häufig muss dazu zusätzlich die Fahrzeugbremse betätigt werden. Erkennt die Überwachungseinheit, dass der Fahrer des Fahrzeugs die Fahrt wieder aufnehmen möchte (z. B. durch das Lösen der Bremse), so wird der Motor automatisch gestartet. Dieses System ist heute bereits für manuelle und auch automatisierte Getriebe verfügbar. Mit automatisierten Getrieben sind beispielsweise Wandlerautomatikgetriebe, stufenlose Getriebe oder auch Doppelkupplungsgetriebe gemeint.

Automatisierte Getriebe verfügen üblicherweise über eine Aktuatorik, um Kupplungen oder Bremsen zu betätigen und/oder Gänge einzulegen. Eine solche Aktuatorik kann hydraulisch betrieben sein, wobei der hydraulische Druck oftmals durch eine Ölpumpe erzeugt wird, welche mit dem Verbrennungsmotor verbunden ist. Sobald der Verbrennungsmotor abgeschaltet wird, fällt der Hydraulikdruck zusammen und die Aktuatorik kann derweil nicht genutzt werden. Erst nach dem Start des Verbrennungsmotors und nach Erreichen der Leerlaufdrehzahl des Motors wird eine solche Aktuatorik erneut angesteuert, um beispielsweise eine Anfahrkupplung zu betätigen. D. h. es vergeht viel Zeit bis die Aktuatorik wieder einsatzbereit ist bzw. bis der notwendige Hydraulikdruck wiederhergestellt ist. Dies empfindet der Fahrer als unangenehme Verzögerung. Um diesen Nachteil zu vermeiden, kann beispielsweise eine zweite elektrische Ölpumpe vorgesehen sein, so dass schon sehr viel früher mit dem Druckaufbau in der Hydraulik begonnen werden kann. Alternativ kann eine einzige Ölpumpe auch mit dem Verbrennungsmotor und einem elektrischen Antrieb verbunden sein, wobei der elektrische Antrieb schon deutlich vor Erreichen der Leerlaufdrehzahl eingeschaltet werden kann. Oder es könnte ein Druckspeicher vorhanden sein, der den Hydraulikdruck aufrecht erhält, solange die Ölpumpe durch den Verbrennungsmotor nicht angetrieben wird. All diese Lösungen zielen darauf ab, den drohenden Zeitverlust dadurch auszugleichen, dass bereits zu einem früheren Zeitpunkt der minimale Systemdruck wieder zur Verfügung steht. Dieser Druck entspricht ungefähr dem Druck, der durch einen im Leerlauf drehenden und die Pumpe antreibenden Verbrennungsmotor zur Verfügung gestellt werden würde.

Die Erfindung kann nun darin gesehen werden, dass die Aktuatorik eines automatisierten Getriebes schon weit vor Erreichen der Leerlaufdrehzahl des Verbrennungsmotors eine Kupplung oder dergleichen betätigt, obwohl der normalerweise bei Leerlaufdrehzahl vorhandene minimale Systemdruck noch gar nicht erreicht ist. D. h., dass während ein Anlasser den Motor zwecks Start durchdreht, schon Hydraulikdruck auf einen Betätigungskolben der Kupplung geschaltet wird, um den Druckraum mit Öl zu "füllen". "Füllen" bedeutet, dass ein Betätigungskolben aus seiner Ruhelage soweit verschoben wird bis dieser an der Kupplung anliegt und diese beginnt, ein Drehmoment (oberhalb der Reibeinflüsse) vom Kupplungseingang zum Kupplungsausgang zu übertragen. Das Differenzvolumen im Druckraum entspricht dem Füllvolumen der Kupplung. Der notwendige Fülldruck liegt in der Regel unterhalb eines Drucks zur Übertragung eines Drehmoments, welches geeignet ist, das Fahrzeug in Bewegung zu setzen. Da der Hydraulikdruck während des Motorstarts weiter zunimmt (denn die Motordrehzahl nimmt während des Starts zu), ist es ebenso denkbar, noch vor Erreichen der Leerlaufdrehzahl, den sich kontinuierlich erhöhenden Kupplungsdruck weiterhin auf der Kupplung zu belassen, so dass noch in der Anlassphase des Motors (Anlasser dreht bzw. vor oder nach dem Zünden des Verbrennungsmotors) ein Anfahrdrehmoment durch die Kupplung übertragen wird. Somit wird sich das Fahrzeug noch vor dem erstmaligen Erreichen der Leerlaufdrehzahl des Motors in Bewegung setzen. Dieses Anfahrdrehmoment (und somit auch der zugeordnete Druck) kann durch eine obere Grenze beschränkt sein.

Es liegt auf der Hand, dass die Aktuatorik während des Startens nur sehr beschränkt einsatzbereit ist (niedriges Druckniveau). In der Folge kann oftmals nur ein einziger Betätigungskolben angesteuert werden. Dies ist in der Regel die Anfahrkupplung. Daher sollte bereits vor dem Abstellen des Motors ein zugehöriger Anfahrgang eingelegt werden, damit beim Starten die gesamte Hydraulikkapazität der Anfahrkupplung zur Verfügung gestellt werden kann. Der Anfahrgang ist üblicherweise der 1. oder auch der 2. Gang.

Den prinzipiellen Aufbau einer (Doppel-)Kupplung zeigt EP 1 382 875 B1 bzw. EP 1 612 444 B1. Es wird nochmals darauf hingewiesen, dass es bei der Erfindung darauf ankommt, ein beliebiges Betätigungselement schon vor Erreichen der Leerlaufdrehzahl zu füllen und ggf. auch zu betätigen. Eine hydraulische Kupplungsbetätigung stellt lediglich ein bevorzugtes Ausführungsbeispiel dar.

Die Erfindung wird anhand der Figuren näher erläutert. Es zeigen:
- Figur 1: schematisch den Aufbau eines Antriebsstrang in einer bevorzugten Ausführung;
- Figur 2: diverse Drehzahlverläufe beim Fahren eines Fahrzeugs; und
- Figur 3: diverse Drehzahlverläufe in Abhängigkeit einer Fahrzeuggeschwin- digkeit.

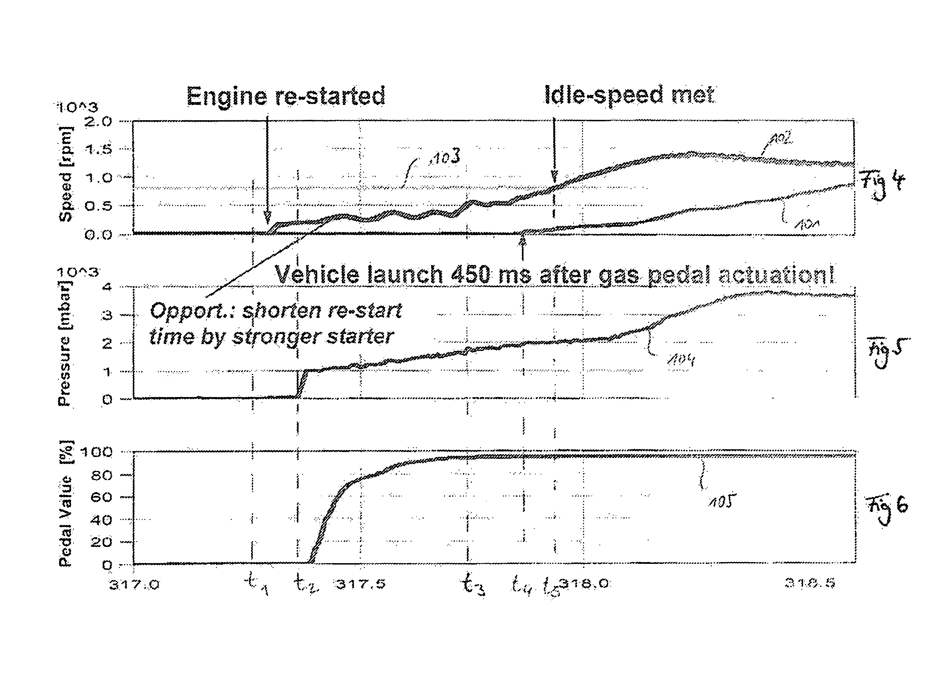

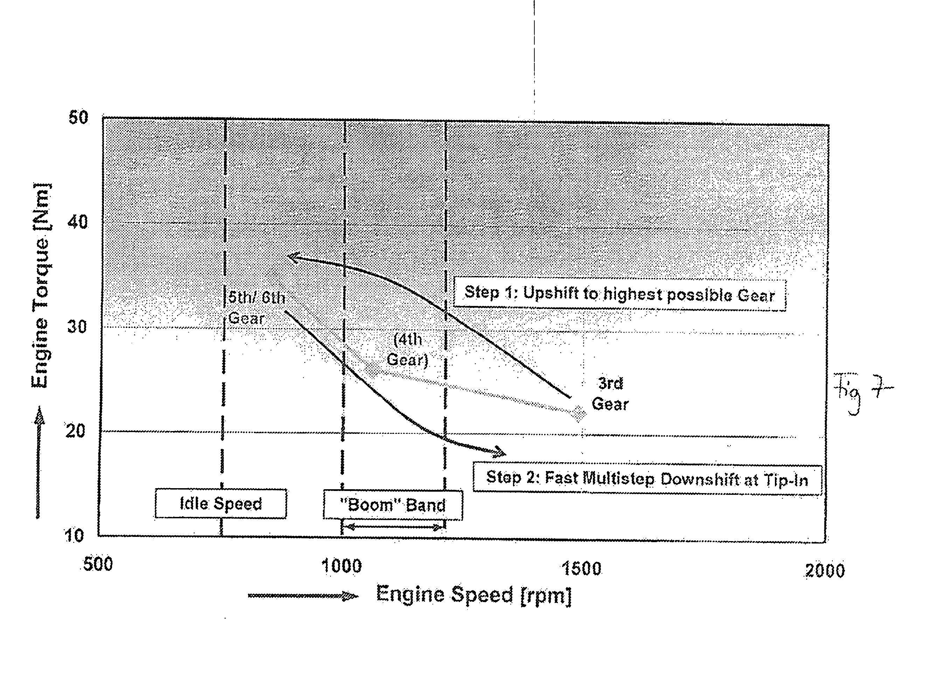

Des Weiteren wird anhand der Figuren 4 bis 7 eine Start-Stop-Funktion und besondere Ausführungen näher erläutert.

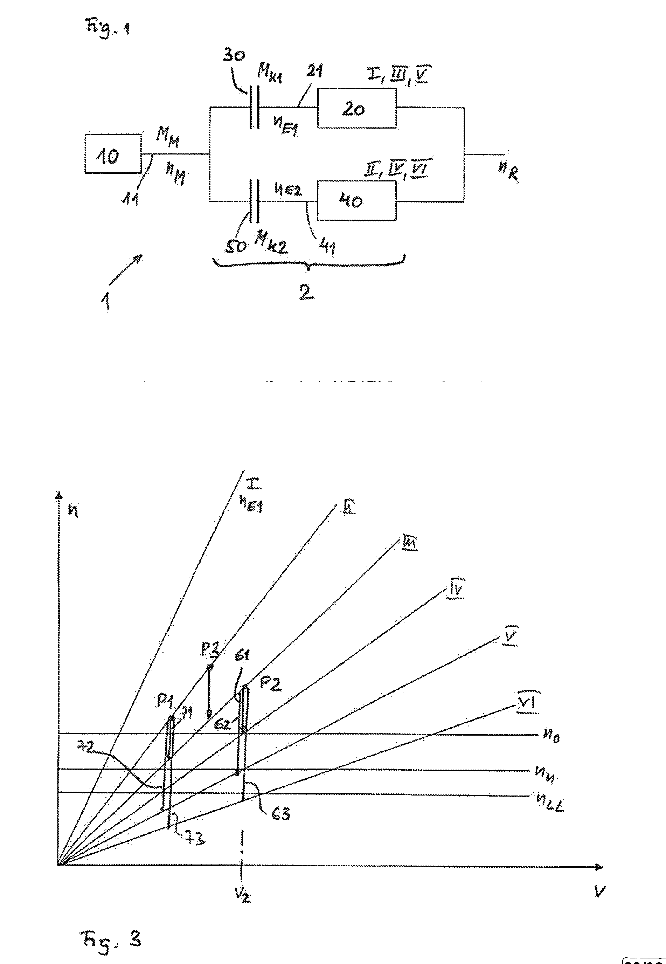

Figur 1 zeigt schematisch den Aufbau eines Antriebsstrangs, der in seiner Gesamtheit mit 1 bezeichnet wird. Der Antriebsstrang umfasst einen Motor 10, der ein Verbrennungsmotor in Form eines Dieselmotors oder eines Benzinmotors sein kann. Des Weiteren umfasst der Antriebsstrang 1 ein erstes Teilgetriebe 20 und ein zweites Teilgetriebe 40. Das erste Teilgetriebe 20 lässt sich über eine erste Kupplung 30 mit dem Motor 10 verbinden. Entsprechend ist eine zweite Kupplung 50 vorgesehen, die zur Verbindung des Motors 10 mit dem zweiten Teilgetriebe 40 dient.

Das erste Teilgetriebe 20 umfasst eine Eingangswelle 21, die sich mit einer Drehzahl n_{E1} dreht. Das zweite Teilgetriebe 40 weist ebenfalls eine Eingangswelle 41 auf, die auch als zweite Eingangswelle bezeichnet wird und sich mit einer Drehzahl n_{E2} dreht. Wenn beispielsweise die erste Kupplung 30 geschlossen ist und somit ohne Schlupf ein Drehmoment M_{M} an einer Kurbelwelle 11 des Motors 10 überträgt, entspricht eine Motordrehzahl n_{M} des Motors 10 bzw. der Kurbelwelle 11 der Drehzahl n_{E1} der ersten Eingangswelle 21. Die Drehzahl des Motors 10 wird mit n_{M} bezeichnet. Bei den Kupplungen 30, 50, soll es sich um automatisierte Kupplungen handeln. Die Kupplungen 30, 50 lassen sich dabei durch geregelte bzw. gesteuerte Aktuatoren öffnen und schließen. Bei einer geöffneten ersten Kupplung 30 beispielsweise wird kein Kupplungsmoment M_{K1} übertragen, während bei geschlossener oder teilweise geschlossener Kupplung 30 ein Kupplungsmoment ungleich Null vom Motor 10 zum ersten Teilgetriebe 20 übertragen wird. Das Kupplungsmoment M_{K1} soll dabei das maximal übertragbare Drehmoment der ersten Kupplung 30 sein. Das Kupplungsmoment der ersten Kupplung und das maximal übertragbare Drehmoment M_{K1} werden also synonym verwendet. Im Schlupfbetrieb, bei dem die Drehzahlen n_{M} und n_{E1} ungleich sind, entspricht das maximal übertragbare Drehmoment M_{K1} der ersten Kupplung 30 dem Motormoment M_{M}. Bei vollständig geschlossener Kupplung ohne Schlupf ist das maximal übertragbare Drehmoment der ersten Kupplung 30 größer als das Moment, welches an der Kurbelwelle 11 anliegt.

Die obigen Ausführungen zu der ersten Kupplung 30 gelten sinngemäß für die zweite Kupplung 50. Das maximal übertragbare Drehmoment oder das Kupplungsmoment der zweiten Kupplung 50 wird mit M_{K2} bezeichnet.

Die beiden Teilgetriebe 20, 40 sowie die beiden Kupplungen 30, 50 können zu einer Einheit zusammen gefasst sein. Diese Einheit bildet dann ein sogenanntes Doppelkupplungsgetriebe 2.

Dem ersten Teilgetriebe 20 sind ungerade Gänge I, III, V zugeordnet, während sich mit dem zweiten Teilgetriebe 40 gerade Gänge II, IV, VI realisieren lassen. Es würde sich somit um ein Doppelkupplungsgetriebe mit 6 Vorwärtsgängen und einem Rückwärtsgang (nicht dargestellt) handeln, wobei letzterer dem ersten Teilgetriebe 20 oder dem zweiten Teilgetriebe 40 zugeordnet sein kann. Natürlich kann das Doppelkupplungsgetriebe auch mehr oder weniger Vorwärtsgänge aufweisen. Letztlich sei noch auf eine Drehzahl n_{R} verwiesen, die die Drehzahl eines Antriebsrads des Fahrzeugs bezeichnen soll, in der der Antriebsstrang 1 eingebaut ist. Das Verhältnis von Drehzahl n_{E1} der ersten Eingangswelle 21 und der Drehzahl n_{R} des hier nicht weiter dargestellten Antriebsrads hängt von dem eingelegten Gang im ersten Teilgetriebe 20 sowie von dem Übersetzungsverhältnis eines Differentials (nicht dargestellt) ab, welches zwischen Doppelkupplungsgetriebe 2 und Antriebsrad geschaltet sein kann.

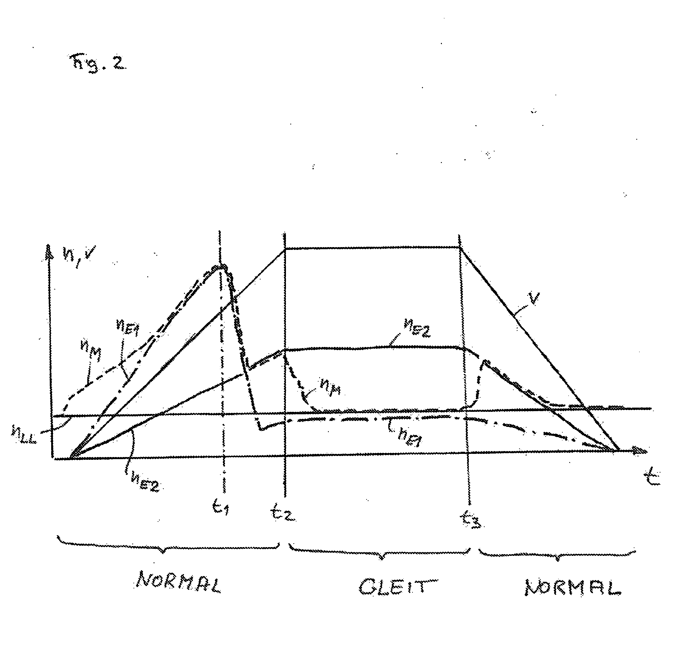

Figur 2 zeigt diverse Drehzahlverläufe in Abhängigkeit der Zeit. Zudem zeigt Figur 2 auch eine Fahrzeuggeschwindigkeit, die mit v bezeichnet wird. In einer ersten Phase wird das Fahrzeug aus dem Stand mit einer konstanten Beschleunigung beschleunigt, bis das Fahrzeug eine gewisse Geschwindigkeit erreicht hat, die in einer zweiten Phase konstant gehalten wird. In einer dritten Phase wird das Fahrzeug von dieser gewissen Geschwindigkeit kontinuierlich wieder auf Null abgebremst. In der ersten Phase wird das Fahrzeug bzw. der Antriebsstrang 1 in einem Normalmodus NORMAL betrieben, während in der zweiten Phase ein Gleitmodus GLEIT gewählt wird. In der dritten Phase liegt wieder der Normalmodus NORMAL vor.

In der ersten Phase wird zunächst mit eingelegtem erstem Gang I und schlupfender ersten Kupplung 30 das Fahrzeug beschleunigt. Bei der Beschleunigung aus dem Stand steigt die Drehzahl n_{E1} der ersten Eingangswelle 21 an. Die Motordrehzahl n_{M}, die von einer Leerlaufdrehzahl n_{LL} startet, liegt zunächst oberhalb der Drehzahl n_{E1} der ersten Eingangswelle 21, nähert sich jedoch dieser an, bis schließlich die beiden Drehzahlen n_{E1} und n_{M}, abgesehen von einem sehr kleinen Schlupf, gleich groß sind.

Da im zweiten Teilgetriebe 40 der Vorwärtsgang II eingelegt ist, führt die Beschleunigung des Fahrzeugs auch zu einem Anstieg der Drehzahl n_{E2} der zweiten Eingangswelle 41. In einem Zeitpunkt t1 wird nun ein Schaltvorgang eingeleitet, bei dem das Kupplungsmoment M_{K1} der ersten Kupplung 30 reduziert und das Kupplungsmoment M_{K2} der zweiten Kupplung 50 aufgebaut wird. Dieser Schaltvorgang führt dazu, dass die Motordrehzahl n_{M} vor einem Zeitpunkt t2 der Drehzahl n_{E2} der zweiten Eingangswelle 41 entspricht. Der Drehmomentfluss durch den Antriebsstrang 1 erfolgt nun somit durch die zweite Kupplung 50. Im ersten Teilgetriebe 20 wird nun der dritte Gang eingelegt, der aufgrund seines kleineren Übersetzungsverhältnisses zu einer Drehzahl n_{E1} der ersten Eingangswelle 21 führt, die nun unterhalb der Leerlaufdrehzahl n_{LL} liegt.

Im Zeitpunkt t2, mit dem der Gleitmodus GLEIT beginnt, wird die zweite Kupplung 50 geöffnet und die erste Kupplung 30 in einen Schlupfbetrieb überführt, in dem die Kupplung 30 Drehmoment überträgt. Die Motordrehzahl n_{M} nimmt dabei Werte gleich der Leerlaufdrehzahl n_{LL} an. Im Gleitmodus GLEIT übernimmt ein Leerlaufregler die Regelung des Motors 10. Zu einem Zeitpunkt t3 wird der Gleitmodus GLEIT verlassen, in dem die zweite Kupplung 50 wieder geschlossen wird. Da im Zeitpunkt t3 und kurz danach die Drehzahl n_{E2} der zweiten Eingangswelle 41 größer als die Motordrehzahl n_{M} ist, kann eine Schubabschaltung des Motors 10 (Treibstoffzufuhr wird unterbrochen) erfolgen, da nun der Motor 10 durch die Trägheitskräfte des sich verlangsamenden Fahrzeugs mitgeschleppt wird.

Figur 3 zeigt qualitativ den Zusammenhang zwischen den Drehzahlen der Eingangswellen 21, 41 in Abhängigkeit der Fahrzeuggeschwindigkeit v und des jeweils eingelegten Gangs. Beispielsweise zeigt die mit der größten Steigung behaftete Gerade die Drehzahl n_{E1} der ersten Eingangswelle 21, wenn der erste Gang I eingelegt ist.

In den beispielhaft gewählten Betriebspunkten des zweiten Gangs II (P1, P3) sind jeweils mögliche Hochschaltungen gezeigt. Auch ist für den dritten Gang III ein Betriebspunkt P2 dargestellt. Für die Betriebspunkte P1 und P2 sind drei mögliche Hochschaltungen skizziert. Für den Betriebspunkt P3 ist lediglich eine Hochschaltung dargestellt. Im zuletzt genannten Betriebspunkt P3 liegt ein Zielgang außerhalb eines Drehzahlbands, das durch eine untere Drehzahl nᵤ und eine obere Drehzahl nₒ begrenzt wird. Dieses Drehzahlband bzw. dieser Drehzahlbereich soll einen sogenannten Boom-Bereich darstellen, in dem der Motor zur Vermeidung unerwünschter Geräusche möglichst nicht betrieben werden soll. Wie der Figur 3 zu entnehmen ist, liegt der Boom-Bereich mit seinen Grenzen nᵤ, nₒ oberhalb der Leerlaufdrehzahl n_{LL}. Die Differenz zwischen unterer Drehzahl nᵤ und oberer Drehzahl nₒ muss nicht zwangsläufig über der Fahrzeuggeschwindigkeit v konstant sein, sondern kann mit ihr abnehmen oder auch zunehmen. Die untere Drehzahl nᵤ kann sogar in etwa der Leerlaufdrehzahl n_{LL} entsprechen.

Am Beispiel des Betriebspunktes P3 im zweiten Gang II ist nur eine Hochschaltung dargestellt, wobei keine Schaltung in einen noch höheren Gang erwogen wird, da sonst die obere Drehzahl nₒ unterschritten werden würde.

Am Beispiel des Betriebspunktes P2 im dritten Gang III wird das Verfahren nochmals erläutert. Bei einer Geschwindigkeit v₂ würde eine Schaltung in den nächsthöheren Gang bedeuten, dass die Motordrehzahl n_{M} in den Boom-Bereich fiele bzw. hier genau der oberen Drehzahl nₒ entspricht. Eine derartige Schaltung ist mit dem Pfeil 61 dargestellt. Aus einer Schaltung in den fünften oder sechsten Gang V, VI (Pfeil 62, 63) resultiert jeweils eine Motordrehzahl n_{M} unterhalb der unteren Drehzahl nᵤ. Es würde sich somit um Schaltungen handeln, bei denen der Boom-Bereich nicht getroffen werden würde. Bei der Schaltung in den sechsten Gang VI würde die Motordrehzahl n_{M} sogar unterhalb der Leerlaufdrehzahl n_{LL} liegen. Dies würde zu einem Gleitmodus GLEIT führen, bei dem der Motor mittels Leerlaufregler geregelt werden kann, ohne dass das Drehzahlniveau des Motors angehoben werden muss. Analoges gilt für den Betriebspunkt P1 im zweiten Gang II.

Natürlich kann das Verfahren zur Vermeidung des Boom-Bereich nicht nur bei Hoch-, sondern auch bei Runterschaltungen angewendet werden. Typische Drehzahlen für die Drehzahl nᵤ liegen bei 600 bis 800 Umdrehungen pro Minute, während sie für die obere Drehzahl nₒ rund 1.150 Umdrehungen pro Minute betragen können.

Die Erfindung beschreibt vorzugsweise somit ein Verfahren, welches den Zustand des Segelns oder Gleitens eines Fahrzeugs verlängert, indem ein Gang eingelegt wird, der zu einer Drehzahl der Eingangswelle führt, die unterhalb des Boom-Bereichs liegt, um dann die Kupplung soweit zu schließen, dass ein Drehmoment über die dann schlupfende Kupplung übertragen wird.

Die Figuren 4, 5 und 6 zeigen verschiedene Parameter jeweils zeitgleich gegenübergestellt. In Fig. 4 ist der zeitliche Verlauf der Leerlaufdrehzahl (103), der Motordrehzahl (102) und der Raddrehzahl (101) dargestellt. Fig. 5 zeigt den Kupplungsbetätigungsdruck (104) und Fig. 6 die Gaspedalstellung (105), was letztlich den Fahrerwunsch darstellt. Zum Zeitpunkt t1 gibt die Überwachungseinheit den Befehl für den Motorstart. Unmittelbar danach startet der Motor und die Motordrehzahl erhöht sich. Zum Zeitpunkt t2 beginnt die vom Motor angetriebene Ölpumpe Druck aufzubauen. Dieser Druck wird unmittelbar zum "Füllen" auf den Betätigungskolben einer Kupplung geschaltet, so dass zu einem Zeitpunkt 13 die Kupplung bereits gefüllt ist. Der sich mit der Drehzahl weiter erhöhende Druck wird auf dem Betätigungskolben belassen. In der Folge setzt sich das Fahrzeug zum Zeitpunkt t4 in Bewegung, wobei der Abtrieb über einen vor dem Abstellen eingelegten Anfahrgang erfolgt. Zum Zeitpunkt t5 erreicht die Motordrehzahl die Leerlaufdrehzahl. Ein "Füllen" bzw. Anfahren ist somit schon vor diesem Zeitpunkt möglich. Dies ist besonders wichtig, da schon zum Zeitpunkt t2 der Fahrer damit beginnt, das Gaspedal zu treten. Das Gaspedal könnte über den dargestellten Zeitraum allerdings auch unbetätigt bleiben (Gaspedalstellung ca. 0 %, nicht gezeigt).

### Bezugszeichenliste

- 1: Antriebsstrang
- 2: Doppelkupplungsgetriebe
- 10: Motor
- 11: Kurbelwelle
- 20: erstes Teilgetriebe
- 21: erste Eingangswelle
- 30: erste Kupplung
- 40: zweites Teilgetriebe
- 41: zweite Eingangswelle
- 50: zweite Kupplung
- 61-63: Pfeile
- 71-73: Pfeile

## Patentansprüche

1. Verfahren zum Betreiben eines Fahrzeugs, wobei das Fahrzeug einen Antriebsstrang (1) aufweist, der ein Antriebsmoment bereitstellt und der einen Motor (10), wenigstens eine erste automatisierte Kupplung (30) und ein Schaltgetriebe mit wenigstens einer ersten Eingangswelle (21) aufweist, wobei das Antriebsmoment vom Motor (10) über die erste Kupplung (30) auf die erste Eingangswelle (21) übertragbar ist, wobei
zwischen einem Normalmodus NORMAL und einem Gleitmodus GLEIT des Fahrzeugs unterschieden wird, wobei im Normalmodus NORMAL das Antriebsmoment durch ein Motormoment M_{M} des Motors (10) eingestellt wird und wobei in dem Gleitmodus GLEIT das Antriebsmoment über ein maximal übertragbares Drehmoment M_{K1} der ersten Kupplung (30) eingestellt wird, die erste Kupplung (30) mit Schlupf betrieben wird, die Motordrehzahl n_{M} in etwa einer Leerlaufdrehzahl n_{LL} des Motors entspricht, und **dadurch gekennzeichnet, dass** die Drehzahl der ersten Eingangswelle (21) kleiner als die Motordrehzahl n_{M} ist.

2. Verfahren nach Anspruch 1, **dadurch gekennzeichnet, dass** im Gleitmodus GLEIT der Motor (10) über einen Drehzahlregler oder Drehzahlsteller geregelt wird.

3. Verfahren nach Anspruch 1 oder 2, **dadurch gekennzeichnet, dass** im Gleitmodus GLEIT die Motordrehzahl n_{M} unterhalb von 1000 1/min liegt.

4. Verfahren nach einem der Ansprüche 1 bis 3, **dadurch gekennzeichnet, dass** der Schlupf mehr als 20 1/min beträgt.

5. Verfahren nach einem der Ansprüche 1 bis 4, **dadurch gekennzeichnet, dass** das Schaltgetriebe als Doppelkupplungsgetriebe (2) ausgebildet ist, das ein erstes Teilgetriebe (20) und ein zweites Teilgetriebe (40) aufweist, wobei die erste Eingangswelle (21) dem ersten Teilgetriebe (20) zugeordnet ist und sich über die erste Kupplung (30) mit dem Motor (10) verbinden lässt, und wobei das Doppelkupplungsgetriebe (2) eine zweite, dem zweiten Teilgetriebe (40) zugeordnete Eingangswelle (41) aufweist, die sich über eine zweite Kupplung (50) mit dem Motor (10) verbinden lässt.

6. Verfahren nach Anspruch 5, **dadurch gekennzeichnet, dass** in dem zweiten Teilgetriebe (40) ein Fahrgang eingelegt wird, der zu einer Drehzahl n_{E2} der zweiten Eingangswelle (41) führt, die deutlich über der Leerlaufdrehzahl n_{LL} des Motors (10) liegt, und dass in dem ersten Teilgetriebe (20) ein Gleitgang eingelegt wird, der zu einer Drehzahl n_{E1} der ersten Eingangswelle (21) führt, die unter der Leerlaufdrehzahl n_{LL} des Motors (10) liegt, wobei im Gleitmodus GLEIT die zweite Kupplung (50) im Wesentlichen geöffnet ist.

7. Verfahren nach Anspruch 6, **dadurch gekennzeichnet, dass** im Gleitmodus GLEIT im zweiten Teilgetriebe (40) ein anderer Gang eingelegt wird.

8. Verfahren nach einem der Ansprüche 1 bis 7, **dadurch gekennzeichnet, dass** im Gleitmodus GLEIT das maximal übertragbare Kupplungsmoment M_{K1} der ersten Kupplung (30) von der Fahrzeuggeschwindigkeit v und/oder den Fahrzeugwiderständen abhängt

9. Verfahren nach einem der Ansprüche 1 bis 8, **dadurch gekennzeichnet, dass** im Gleitmodus GLEIT das maximal übertragbare Kupplungsmoment M_{K1} der ersten Kupplung (30) von einer Fahrpedalstellung abhängt.

10. Verfahren nach einem der Ansprüche 1 bis 9, **dadurch gekennzeichnet, dass** im Gleitmodus GLEIT das maximal übertragbare Kupplungsmoment M_{K1} der ersten Kupplung (30) vom Schlupf abhängt.

11. Verfahren nach einem der Ansprüche 1 bis 10, **dadurch gekennzeichnet, dass** im Gleitmodus GLEIT bei sehr niedrigen Fahrpedalstellungen die erste Kupplung (30) geschlossen wird, soweit die Drehzahl n_{E1} der ersten Eingangswelle 21 und/oder Drehzahl n_{E2} der zweiten Eingangswelle 41 zumindest etwas größer als die Leelaufdrehzahl n_{LL} ist.

12. Verfahren nach einem der Ansprüche 1 bis 11, **dadurch gekennzeichnet, dass** ab einem Grenzwert G1 für die Fahrpedalstellung vom Gleitmodus GLEIT in den Normalmodus NORMAL gewechselt wird.

13. Verfahren nach einem der Ansprüche, **dadurch gekennzeichnet, dass** unter einem zweiten Grenzwert G2 für die Fahrpedalstellung vom Gleitmodus GLEIT in den Normalmodus NORMAL gewechselt wird, wobei entweder die erste Kupplung (30) oder die zweite Kupplung (50) zumindest teilweise geschlossen wird.

14. Verfahren nach Anspruch 13, **dadurch gekennzeichnet, dass** das von der Kupplung maximal übertragbare Kupplungsmoment M_{K1} oder M_{K2} durch die Fahrpedalstellung bestimmt wird.

15. Verfahren nach Anspruch 12 bis 14, **dadurch gekennzeichnet, dass** das Motormoment M_{M} bei Motordrehzahlen oberhalb der Leerlaufdrehzahl n_{LL} unterhalb vom zweiten Grenzwert G2 bremsend und oberhalb vom ersten Grenzwert G1 antreibens wirkt.

## Claims

1. Method for operating a vehicle, wherein the vehicle has a drivetrain (1) which provides a drive torque and which has an engine (10), at least one first automated clutch (30) and a shift transmission having at least one first input shaft (21), wherein the drive torque can be transmitted from the engine (10) to the first input shaft (21) via the first clutch (30), wherein a distinction is made between a normal mode NORMAL and a cruising mode CRUISE of the vehicle, wherein in the normal mode NORMAL, the drive torque is set by means of an engine torque M_{M} of the engine (10), and wherein in the cruising mode CRUISE, the drive torque is set by means of a maximum transmissible torque M_{K1} of the first clutch (30), the first clutch (30) is operated with slip, and the engine rotational speed n_{M} corresponds approximately to an idle rotational speed n_{LL} of the engine, **characterized in that** the rotational speed of the first input shaft (21) is lower than the engine rotational speed n_{M}.

2. Method according to Claim 1, **characterized in that**, in the cruising mode CRUISE, the engine (10) is regulated by means of a rotational speed regulator or rotational speed controller.

3. Method according to Claim 1 or 2, **characterized in that**, in the cruising mode CRUISE, the engine rotational speed n_{M} lies below 1000 rpm.

4. Method according to one of Claims 1 to 3, **characterized in that** the slip amounts to more than 20 rpm.

5. Method according to one of Claims 1 to 4, **characterized in that** the shift transmission is in the form of a dual-clutch transmission (2) which has a first component transmission (20) and a second component transmission (40), wherein the first input shaft (21) is assigned to the first component transmission (20) and can be connected to the engine (10) via the first clutch (30), and wherein the dual-clutch transmission (2) has a second input shaft (41) which is assigned to the second component transmission (40) and which can be connected to the engine (10) via a second clutch (50).

6. Method according to Claim 5, **characterized in that**, in the second component transmission (40), a traction gear is engaged which results in a rotational speed n_{E2} of the second input shaft (41) which is considerably higher than the idle rotational speed n_{LL} of the engine (10), and **in that**, in the first component transmission (20), a cruising gear is engaged which results in a rotational speed n_{E1} of the first input shaft (21) which is lower than the idle rotational speed n_{LL} of the engine (10), wherein in the cruising mode CRUISE, the second clutch (50) is substantially open.

7. Method according to Claim 6, **characterized in that**, in the cruising mode CRUISE, a different gear is engaged in the second component transmission (40).

8. Method according to one of Claims 1 to 7, **characterized in that**, in the cruising mode CRUISE, the maximum transmissible clutch torque M_{K1} of the first clutch (30) is dependent on the vehicle speed v and/or on the vehicle resistances.

9. Method according to one of Claims 1 to 8, **characterized in that**, in the cruising mode CRUISE, the maximum transmissible clutch torque M_{K1} of the first clutch (30) is dependent on an accelerator pedal position.

10. Method according to one of Claims 1 to 9, **characterized in that**, in the cruising mode CRUISE, the maximum transmissible clutch torque M_{K1} of the first clutch (30) is dependent on the slip.

11. Method according to one of Claims 1 to 10, **characterized in that**, in the cruising mode CRUISE, at very small accelerator pedal positions, the first clutch (30) is closed when the rotational speed n_{E1} of the first input shaft 21 and/or the rotational speed n_{E2} of the second input shaft 41 is at least slightly higher than the idle rotational speed n_{LL}.

12. Method according to one of Claims 1 to 11, **characterized in that**, beyond a threshold value G1 for the accelerator pedal position, a switch is made from the cruising mode CRUISE into the normal mode NORMAL.

13. Method according to one of the claims, **characterized in that**, below a second threshold value G2 for the accelerator pedal position, a switch is made from the cruising mode CRUISE into the normal mode NORMAL, wherein either the first clutch (30) or the second clutch (50) is at least partially closed.

14. Method according to Claim 13, **characterized in that** the maximum clutch torque M_{K1} or M_{K2} that can be transmitted by the clutch is determined by the accelerator pedal position.

15. Method according to Claims 12 to 14, **characterized in that** the engine torque M_{M} has a braking action at engine rotational speeds above the idle rotational speed n_{LL} and below the second threshold value G2, and has a driving action at engine rotational speeds above the first threshold value G1.

## Revendications

1. Procédé destiné au fonctionnement d'un véhicule, le véhicule comportant une chaîne cinématique (1) mettant à disposition un couple d'entraînement et comportant un moteur (10), au moins un premier embrayage automatisé (30) et une boîte de vitesses dotée d'au moins un premier arbre d'entrée (21), le couple d'entraînement pouvant être transmis du moteur (10) au premier arbre d'entrée (21) par le biais du premier embrayage (30) ;
la distinction étant faite entre un mode normal NORMAL et un mode de patinage GLEIT du véhicule, le couple d'entraînement étant réglé par un couple moteur M_{M} du moteur (10) dans le mode normal NORMAL et le couple d'entraînement étant réglé par le biais d'un couple de rotation M_{K1} du premier embrayage (30) maximum transmissible dans le mode de patinage GLEIT, le premier embrayage (30) étant entraîné avec un certain patinage, la vitesse de rotation du moteur n_{M} correspondant approximativement à un vitesse de rotation à vide n_{LL} du moteur ;
**caractérisé en ce que** la vitesse de rotation du premier arbre d'entrée (21) est inférieure à la vitesse de rotation du moteur n_{M}.

2. Procédé selon la revendication 1, **caractérisé en ce que** dans le mode de patinage GLEIT, le moteur (10) est réglé par le biais d'un régulateur de vitesse de rotation ou d'un gradateur de vitesse de rotation.

3. Procédé selon la revendication 1 ou 2, **caractérisé en ce que** dans le mode de patinage GLEIT, la vitesse de rotation du moteur n_{M} est inférieure à 1000 tr/min.

4. Procédé selon l'une quelconque des revendications 1 à 3, **caractérisé en ce que** le patinage est supérieur à 20 tr/min.

5. Procédé selon l'une quelconque des revendications 1 à 4, **caractérisé en ce que** la boîte de vitesses prend la forme d'une boîte de vitesses à double embrayage (2) comprenant une première partie de boîte de vitesses (20) et une deuxième partie de boîte de vitesses (40), le premier arbre d'entrée (21) étant associé à la première partie de boîte de vitesses (20) et pouvant être relié au moteur (10) par le biais du premier embrayage (30) et la boîte de vitesses à double embrayage (2) comprenant un deuxième arbre d'entrée (41) associé à la deuxième partie de boîte de vitesses (40) pouvant être relié au moteur (10) par le biais d'un deuxième embrayage (50).

6. Procédé selon la revendication 5, **caractérisé en ce que** dans la deuxième partie de boîte de vitesses (40), un rapport de conduite est passé permettant d'accéder à une vitesse de rotation n_{E2} du deuxième arbre d'entrée (41) sensiblement supérieure à la vitesse de rotation à vide n_{LL} du moteur (10) et que dans la première partie de boîte de vitesses (20), un rapport de patinage est passé permettant d'accéder à une vitesse de rotation n_{E1} du premier arbre d'entrée (21) inférieure à la vitesse de rotation à vide n_{LL} du moteur (10), le deuxième embrayage (50) étant pour l'essentiel ouvert dans le mode de patinage GLEIT.

7. Procédé selon la revendication 6, **caractérisé en ce que** dans le mode de patinage GLEIT, un autre rapport est passé dans la deuxième partie de boîte de vitesses (40).

8. Procédé selon l'une quelconque des revendications 1 à 7, **caractérisé en ce que** dans le mode de patinage GLEIT, le couple d'embrayage M_{K1} maximum transmissible du premier embrayage (30) dépend de la vitesse du véhicule v et/ou des résistances du véhicule.

9. Procédé selon l'une quelconque des revendications 1 à 8, **caractérisé en ce que** dans le mode de patinage GLEIT, le couple d'embrayage M_{K1} maximum transmissible du premier embrayage (30) dépend de la position d'une pédale d'accélérateur.

10. Procédé selon l'une quelconque des revendications 1 à 9, **caractérisé en ce que** dans le mode de patinage GLEIT, le couple d'embrayage M_{K1} maximum transmissible du premier embrayage (30) dépend du patinage.

11. Procédé selon l'une quelconque des revendications 1 à 10, **caractérisé en ce que** dans le mode de patinage GLEIT, en présence de positions de pédale d'accélérateur très basses, le premier embrayage (30) est fermé tant que la vitesse de rotation n_{E1} du premier arbre d'entrée 21 et/ou la vitesse de rotation n_{E2} du deuxième arbre d'entrée 41 est au moins approximativement supérieure à la vitesse de rotation à vide n_{LL}.

12. Procédé selon l'une quelconque des revendications 1 à 11, **caractérisé en ce qu'**à partir d'une valeur limite G1 associée à la position d'une pédale d'accélérateur, on bascule du mode de patinage GLEIT au mode normal NORMAL.

13. Procédé selon l'une quelconque des revendications, **caractérisé en ce qu'**en dessous d'une deuxième valeur limite G2 associée à la position d'une pédale d'accélérateur, on bascule du mode de patinage GLEIT dans le mode normal NORMAL, soit le premier embrayage (30) soit le deuxième embrayage (50) étant alors au moins en partie fermé.

14. Procédé selon la revendication 13, **caractérisé en ce que** le couple d'embrayage M_{K1} ou M_{K2} maximum transmissible par l'embrayage est défini par la position d'une pédale d'accélérateur.

15. Procédé selon les revendications 12 à 14, **caractérisé en ce que** le couple moteur M_{M} agit en provoquant un freinage pour des vitesses de rotation du moteur supérieures à la vitesse de rotation à vide n_{LL} en dessous de la deuxième valeur limite G2 et en provoquant un entraînement en entrée au-dessus de la première valeur limite G1.
